# EUROPEAN PATENT APPLICATION

(11) **EP 2 418 369 A1**
(43) Date of publication of application: **15.02.2012**
(21) Application number: 10172741.0
(22) Date of filing: 13.08.2010
(51) Int. Cl.: F02D 41/00, F02D 41/02

(54) **System for controlling exhaust gas temperature of an internal combustion engine with an exhaust gas after-treatment device and prime mover including same**

(71) Applicant: Nederlandse Organisatie voor Toegepast -Natuurwetenschappelijk Onderzoek TNO, 2628 VK Delft (NL)
(72) Inventor: van Gompel, Petrus Henricus Cornelis, 2628 VK Delft (NL)
(74) Representative: Jansen, Cornelis Marinus

(57) **Abstract**

A system for controlling exhaust gas temperature of an internal combustion engine having a combustion cycle frequency and being provided with an exhaust gas after-treatment device. The system includes a combustion airflow control valve adapted for positioning upstream of an air inlet of a combustion chamber. The system further includes a control unit for controlling the airflow controlling valve and an exhaust gas temperature sensor adapted for positioning upstream of, and adjacent to, the exhaust gas after-treatment device. In use the temperature sensor communicates with the control unit and the control unit communicates with the airflow control valve. The system in particular has its airflow control valve adapted to be operated at a frequency commensurate with the combustion cycle frequency. Further a prime mover is disclosed that includes an internal combustion engine provided with an exhaust gas after-treatment device and the system for controlling the exhaust gas temperature.

## Description

The invention relates to a system for controlling exhaust gas temperature of an internal combustion engine. More in particular the invention relates to a system for controlling the exhaust gas temperature of such engines having an exhaust gas after-treatment device. The invention also relates to a prime mover including same.

A major concern and commitment of today's internal combustion engine designers and manufacturers is to reduce fuel consumption, in the interest of economy and CO₂ emission. This commitment conflicts with environmental legislation in respect of reducing NO_{X} and particulates (including soot). To meet future emission legislation, such as EURO VI, 2013 with respect to NO_{X} and carbon particles, use of exhaust after-treatment, such as provided by Selective Catalytic Reduction (SCR catalytic converter) and by a Diesel Particulate Filter (DPF) is required. SCR catalytic converters can achieve over 95% efficiency, provided that exhaust gas temperatures exceed 200 °C. This condition cannot be met during engine start-up, or during periods of low engine load. In as far as DPF filter devices are concerned, these are only effective until reaching a point of saturation. When close to their saturation point DPF devices have an adverse effect on fuel consumption and therefore need periodic regenerations requiring a temporary increasing of the exhaust temperature.

Systems for increasing exhaust gas temperature have included reduction or interruption of Exhaust Gas Recirculation (EGR), if employed, altering timing and/or amount of the fuel injection, changing valve timing and/or lift, and even electrically heating the exhaust tract. It has also been tried to provoke an increased exhaust temperature by injecting small amounts of fuel at a late point of time in the expansion cycle of the engine (post-injection) or by increasing back pressure in the exhaust system. Most of these methods - as well as the currently often employed practises of raising exhaust gas temperatures, by positioning burners in the exhaust gas tract, or by injection of fuel directly into the exhaust - result in an undesirable increase in fuel consumption.

Published United States patent application document US 2009/0217645 generally discloses an engine management system amongst other things adjusting the flow of fresh air to an engine, by optionally using a throttle valve. Thermal management of in particular a Selective Catalyst Reducer (SCR) is accomplished by a fuel dosing device associated with a Diesel Particulate Filter (DPF) upstream of the SCR. This system is confined to engines with an exhaust purification system having in succession a Diesel Oxidation Catalyst (DOC), a Diesel Particulate Filter (DPF), and a Selective Catalyst Reducer (SCR), in this particular upstream to downstream order. In this arrangement the focus is on the thermal management of the entire after-treatment system including light off temperatures required by the DPF, wherein the teaching is that the SCR catalytic converter benefits from being positioned downstream of the DPF filter, when the filter burns off soot. However this condition cannot always be sustained and also requires fuel to be added to the exhaust gas. Hence this known system for heating up a SCR will not operate without a penalty to fuel efficiency.

Document US 2009/0293453, disclosing the contents of another published United States patent application, relates to another system for controlling engine exhaust temperature. In this system the focus is on controlling the exhaust temperature during a regeneration cycle of a Particulate Matter (PM) filter. Again this after-treatment line is conventional in having a Diesel Oxidation Catalyst (DOC) at an upstream end of the exhaust treatment tract, a DPF, or PM filter, downstream of the DOC and finally a SCR at a downstream end of the exhaust treatment tract. In this system the exhaust temperature upstream of the DOC is controlled to effect regeneration of the DPF, as well as at the same time providing a proper temperature for the SCR. This known exhaust gas temperature control system provides for a complicated thermal management strategy using variable settings of a throttle valve in the engine air inlet, in combination with variable settings of a VTG turbocharger and a fuel injection module to control exhaust gas temperature. This system is therefore unsuitable for use without a VTG turbocharger and moreover throttles the inlet tract for extended periods, which invokes fuel efficiency penalties and losses.

Accordingly it is an object of the present invention to propose an improved system for controlling exhaust gas temperature of an internal combustion engine. In a more general sense it is thereby an object of the invention to overcome or ameliorate at least one of the disadvantages of the prior art. It is thus in particular an object of the present invention to enable a selective increase of exhaust gas temperatures without compromising fuel economy. In a broader sense it is also an object of the invention to increase the exhaust gas temperature for a specific predetermined after-treatment component in an exhaust gas after-treatment component in the exhaust system at partial load.

This notably applies to the application examples of:
(a) increasing the temperature of an SCR catalyst thereby increasing it's efficiency at low load;
(b) increasing the temperature for a diesel particulate filter (DPF), to enable passive regeneration in a broader range of conditions;
(c) increasing the temperature of a diesel oxidation catalyst to enhance the oxidation of unburned hydrocarbons; and
(d) improving the efficiency of NO to NO2 oxidation in a diesel oxidation catalyst (DOC), which in turn improves SCR efficiency (in a DOC>DPF>SCR arrangement, typical for OEM systems) and can also improve the ability of passive DPF regeneration.

Clearly these specific application examples are dependent on the particular layout of the after-treatment system. Further it is an object of the present invention to provide alternative structures which are less cumbersome in assembly and operation and which moreover can be made relatively inexpensively. Furthermore it is an object of the invention to at least provide the public with a useful choice, when the object of the invention can be achieved in several ways.

To this end the invention provides a system for controlling exhaust gas temperature of an internal combustion engine having a combustion cycle frequency and being provided with an exhaust gas after-treatment device, the system including: a combustion airflow control valve adapted for positioning upstream of an air inlet of a combustion chamber; a control unit for controlling the airflow controlling valve; an exhaust gas temperature sensor adapted for positioning upstream of, and adjacent to, the exhaust gas after-treatment device; wherein in use the temperature sensor communicates with the control unit and the control unit communicates with the airflow control valve, wherein the airflow control valve is adapted to be operated at a frequency commensurate with the combustion cycle frequency. More in particular the airflow control valve is able to operate within an inlet valve stroke of an internal combustion engine. In view of the required speed of operation a conventional throttle valve would be unsuitable for this purpose. The invention in particular is applicable to any type of internal combustion engine that uses charge quality control, including naturally aspirated engines.

An electronically controlled intermittingly operable valve is included in the inlet tract of an internal combustion engine. The electronic control ensures that the air mass entering the engine is controlled without significant throttle losses, because the periods of airflow interruption are within the duration of a single working cycle of the internal combustion engine.

In one advantageous embodiment of the invention the combustion airflow control valve can be an auxiliary valve that is adapted to be positioned upstream of an engine's periodically opening and closing combustion chamber entrance. In such an embodiment it can also be advantageous when the auxiliary valve is one of a plurality of such valves, each adapted to be associated directly with a relevant one of an equal plurality of combustion chamber entrances and to be independently operated in accordance with the combustion cycle of the relevant combustion chamber.

In another advantageous embodiment of the invention the combustion airflow control valve can be associated with the engine's variable timing valve actuation system.

Irrespective of the particularly preferred embodiment of the invention, the control unit is advantageously adapted in use to determine whether a temperature sensed by the exhaust gas temperature sensor exceeds a predefined value. In such an arrangement the control unit in use can further be adapted to perform one of:
(i) advancing closure of the flow control valve, if it is associated with an engine's variable timing valve actuation system, preferably by directly advancing valve closure of an engine's periodically opening and closing combustion chamber entrance; and
(ii) closing the control valve in advance of closure of an engine's periodically opening and closing combustion chamber entrance, if it is an auxiliary valve, to thereby reduce combustion air mass admitted into the engine's combustion chamber. It is thereby of further advantage when the control unit is also further adapted in use to be combined with exhaust gas recirculation and to determine whether a recirculation flow of exhaust gas achieves a predetermined level of NOₓ reduction and including means responsive to such determination to adjust the recirculation flow, when found necessary, sufficiently to restore the predetermined level.

The invention also provides for a prime mover including an internal combustion engine having a combustion cycle frequency and being provided with an exhaust gas after-treatment device and the system for controlling exhaust gas temperature of an internal combustion engine. Such a prime mover preferably can be used as a vehicle engine. In particular the engine is preferably and advantageously a Diesel-cycle engine. Also advantageously the engine can be provided with a supercharger. Such a supercharger can preferably be a turbocharger and advantageously one having a variable turbine geometry.

The invention can also be advantageously implemented in a prime mover that includes an engine that has conventional periodically operated poppet valves for controlling the inlet of its combustion chamber, or combustion chambers.

The present invention thus provides for a combustion and exhaust gas temperature increasing control system that does not increase fuel consumption. In supercharged Diesel engines, even those using a non-variable Miller-type inlet valve timing, closing the inlet valves before bottom dead centre (BDC), the exhaust gas upstream of an exhaust gas treatment component still can have a temperature lower than that targeted for a proper functioning of the exhaust gas treatment component. The exhaust gas treatment component can be a SCR catalytic converter, a diesel oxidation catalyst (DOC) and/or a DPF, depending on the after treatment system lay-out. Depending on a selected control strategy, the mass flow of air to an engine is adjusted by means of an electronically controlled fast operating valve in the inlet tract of the engine, whereby the temperature of the exhaust gas can be controlled to reach the target temperature. Optionally this airflow adjustment can be accomplished in combination with adjusting the turbine geometry of a variable flow turbo charger (VTG turbo charger). Thus the invention adjusts the mass flow of air to an engine without causing throttle losses. This is achieved by either using additional auxiliary valves, or by closing of the inlet valves before bottom dead centre (BDC). With the solutions according to the invention, there are no significant adverse effects to the fuel consumption of the engine. The invention also enables raising of the exhaust gas temperature under load conditions and other applicable conditions, without raising fuel consumption, as was not possible with the prior art systems.

One preferred embodiment of the present invention is a heavy-duty supercharged Diesel engine having an exhaust tract that incorporates a SCR catalytic converter as its most upstream component of an after-treatment system. Preferably such a heavy-duty supercharged Diesel engine is also provided with a turbo-charger that employs a Variable Turbine Geometry (VTG). Also preferably such an engine benefits from so called Miller valve timing, whereby the inlet valves are closed before the bottom dead centre of the pistons to decrease the engine's effective compression ratio.

One advantage of a Diesel engine over other internal combustion engines is its lack of throttle losses, as a result of controlling engine power by changing the fuel injection amount, rather than throttling the combustion airflow as in Otto-type engines. Usually the amount of combustion air in Diesel engines substantially exceeds the amount needed for the combustion of the injected fuel. This would in particular apply to supercharged Diesel engines. It is in particular this surplus of combustion air that allows the amount of soot particles expelled by a Diesel engine to be minimal. Therefore it would not normally be considered an option to interfere with the flow of combustion air.

Additional useful applications of the invention conceivably include passive regeneration of a DPF. Given the possibility of a continuously higher exhaust gas temperature, the particle mass on the particulate filter may no longer increase, because the quantity that burns off per unit of time may equal the depositions per unit of time. With such a passively regenerating DPF the periodic burn-off intervals can be eliminated, which increases fuel efficiency.

A higher temperature for a diesel oxidation catalyst at part load increases its ability to oxidise unburnt hydrocarbons and also improves it's ability to oxidise NO to N02. This increases the NO2 to NO ratio of the exhaust gas which in turn increases the efficiency of an SCR catalyst and may also increase the ability of a DPF to continuously burn of particulates thereby enlarging the operating window for passive regeneration.

A generally higher exhaust gas temperature may also benefit a waste heat recovery system if employed. The efficiency of such heat recovery system greatly depends on the heat level offered to it. Conceivably even a loss of engine efficiency by further rising the exhaust gas temperature may be offset by the gain in efficiency and controllability of the heat recovery system.

Further advantageous aspects of the invention will become clear from the appended description of preferred embodiments. The invention therefore will now be described in reference to the accompanying drawings, in which:
Figure 1 is a schematic arrangement of an internal combustion engine having variable valve actuation in a first implementation of the invention;
Figure 2 is a schematic arrangement of an internal combustion engine having NOx control valves in a second implementation of the invention;
Figure 3 is a schematic arrangement of an internal combustion having a single airflow control valve in a third implementation of the invention; and
Figure 4 is a flow chart illustrating the logic steps performed by a control unit for an engine management system in accordance with the present invention.

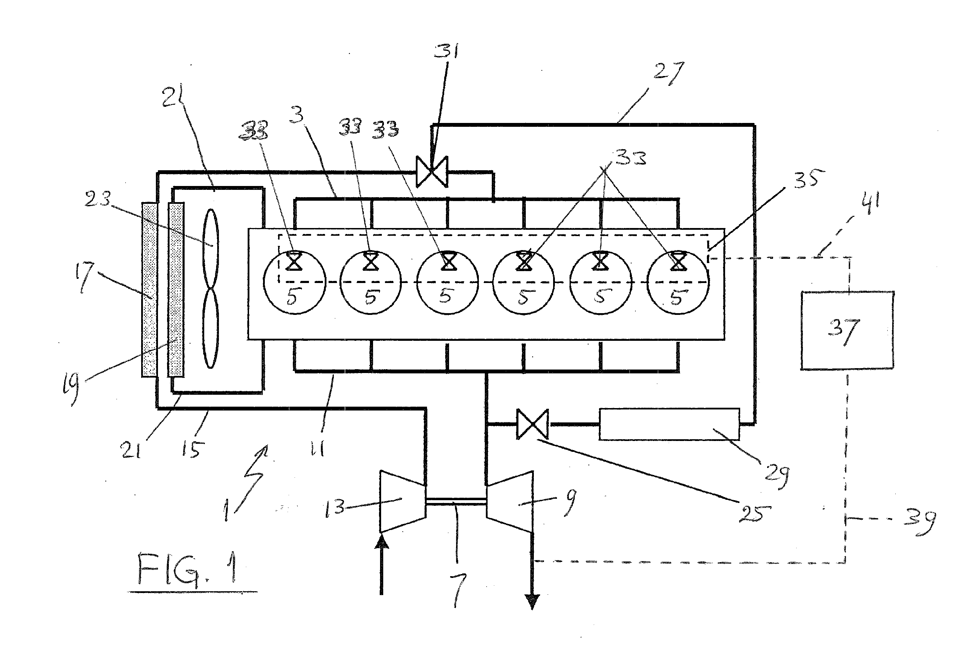

In Figure 1 a schematic representation of a 6-cylinder internal combustion engine 1 is shown. The example of a 6-cylinder engine is arbitrary and the number of cylinders or their arrangement can be varied without diverting from the inventive concept. The engine 1 also is of the Diesel-cycle variety in which an inlet manifold 3 merely guides combustion air into the cylinders 5 and the fuel is injected in the cylinders. A fuel injection system is not shown in the drawings, but is conventional and well known to the skilled person. The engine 1 is also a supercharged engine in which a turbo charger 7 has a turbine 9 driven by exhaust gas from an exhaust manifold 11. The turbo charger 7 also has a compressor 13 driven by the turbine 9 that supplies combustion air to the inlet manifold 3. The combustion air from the turbo charger 7 is supplied to a supply pipe 15, which includes an intercooler 17. The intercooler 17 is conveniently combined with a water cooling radiator 19, for the cooling of the cycling of the cylinders 5 via a water circulation system 21. Cooling air is forced through the intercooler 17 and radiator 19 by means of fan 23. The fan 23 can be mechanically driven by the engine crankshaft, as is conventional, but can also be driven electrically using a secondary source of energy. For the reduction of NO_{X} in the exhaust gases, exhaust gas recirculation (EGR) may be employed. Such an EGR system is usually provided with an EGR valve 25 administering a fraction of the exhaust gas to a recirculation duct 27, via an EGR cooler 29. The recirculation duct 27 is connected to the inlet manifold 3 by an EGR venturi 31 included in the supply pipe 15. The mass flow of combustion air to the cylinders 5 is governed basically by the pressure established in the inlet manifold 3 by means of the air supplied by the compressor 13 and the operating periods of the inlet valves 33. The inlet valves 33 are part of a variable valve timing system 35 acting as a flow control for combustion air to the engine. A management system for the engine 1 includes control unit 37, which communicates through communication line 39 with a temperature sensor on the exhaust system downstream of the exhaust gas turbine 9. The control unit also communicates with the variable valve timing system 35 by a further communication line 41. The control unit 37 is arranged to adjust the mass flow of combustion air admitted to the cylinders 5 in response to the measured exhaust gas temperature, exhaust gas is to be fed to an after-treatment component, such as a SCR catalytic converter (not shown, but conventional). The control unit 37 can achieve an instant increase of the exhaust temperature by advancing the moment of closing the intake or inlet valves 33 by issuing appropriate commands to the variable valve timing system 35 through the communication line 41. When closing of the intake valve 33 is effected before a piston in a cylinder 5 has reached its bottom dead centre, the mass flow of combustion air admitted to that cylinder 5 will be reduced. In practise this will effectively reduce the effect of the compression stroke in compressing the combustion air. While this may slightly reduce engine efficiency, the loss may partly be compensated by the available over expansion after ignition of the injected fuel. During such over expansion more energy can be extracted from the mixture. It has been shown that this manner of controlling exhaust gas temperature by interfering with the valve timing of an internal combustion engine of the Diesel-type allows such control to be achieved without any noticeable loss in engine efficiency and fuel economy.

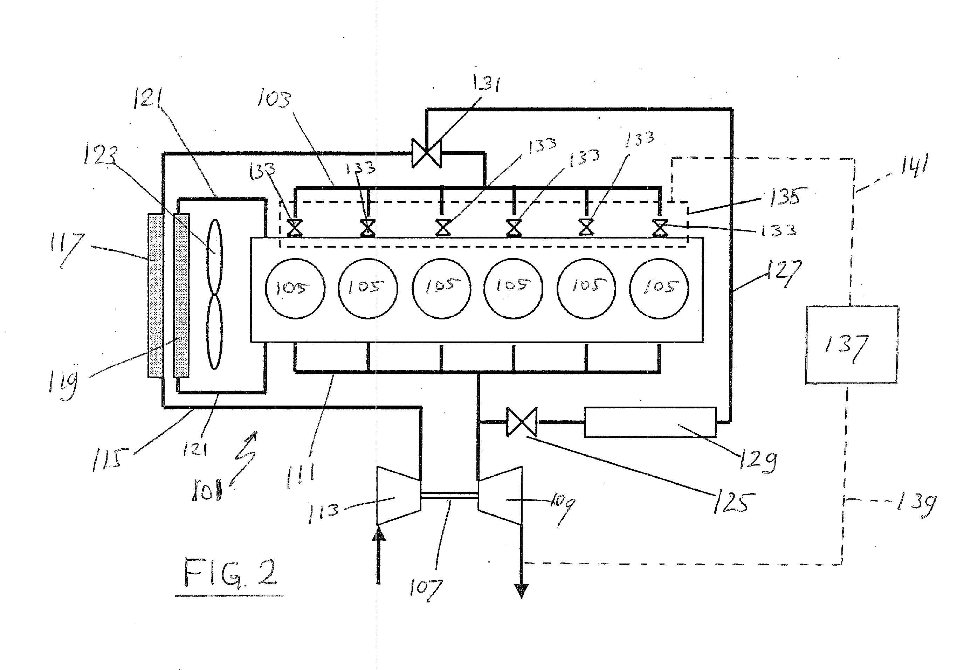

Having reference now to Figure 2, a second implementation of the invention will be explained. Reference numerals as used in Figure 2 are similar to those used in Figure 1, but for addition of a full "100" to denote similar elements. Engine 101 is provided with an inlet manifold 103 distributing combustion air to a plurality of individual cylinders 105. The cylinders 105 each exhaust into exhaust manifold 111 leading to a turbine 109 of a turbo charger 107 for driving a compressor 113. The exhaust manifold 111 also feeds an EGR valve 125 for admitting a portion of the exhaust gas to an exhaust gas recirculation system. The compressor 113 feeds combustion air into supply pipe 115 which is connected to the inlet manifold 103 via an intercooler 117 and EGR venturi 131. The intercooler 117 is positioned in front of engine cooling radiator 119 that is part of a coolant circuit 121 for cooling the cylinders 105. Cooling air is drawn through the intercooler 117 and radiator 119 by a fan 123. An exhaust gas recirculation system controlled by EGR valve 125 returns dosed fractions of the exhaust gas flow back to the inlet side of the engine. Exhaust gas to be recirculated flows through an EGR cooler 129 to lower the temperature of the recirculated exhaust gas t o diminish its temperature difference with the inlet air. The EGR cooler 129 is incorporated into recirculation duct 127 that supplies the EGR venturi 131 by which the recirculated exhaust gas is mixed with the combustion air fed by the supply pipe 115 to the inlet manifold 103. A flow control for combustion air 135 is provided in the form of a plurality of electronically operable auxiliary valves 133 each of which is associated with a respective one of the cylinder.

In the embodiment of Figure 2 the engine has its own mechanically operated valves that are not shown, but generally conventional. Each of the auxiliary valves can be used to shorten the periods of valve opening as determined by the mechanical system. Such valves have been proposed as an after-fitment to existing engines to provide or improve NO_{X} control under certain conditions of use. While under such conditions the electronically operable auxiliary valves are generally used to lower the combustion temperature to prevent formation of NO_{X}. The present invention is based on the discovery that such a system of auxiliary operable valves 133 can also be used when combined with an appropriate mechanical valve timing to control the exhaust gas temperature. To this end a control unit 137 controls the auxiliary valves 133 of the airflow control 135 in response to the exhaust gas temperature communicated through communication line 139. The airflow control 135 receives commands from the control unit 137 via a further communication line 141.

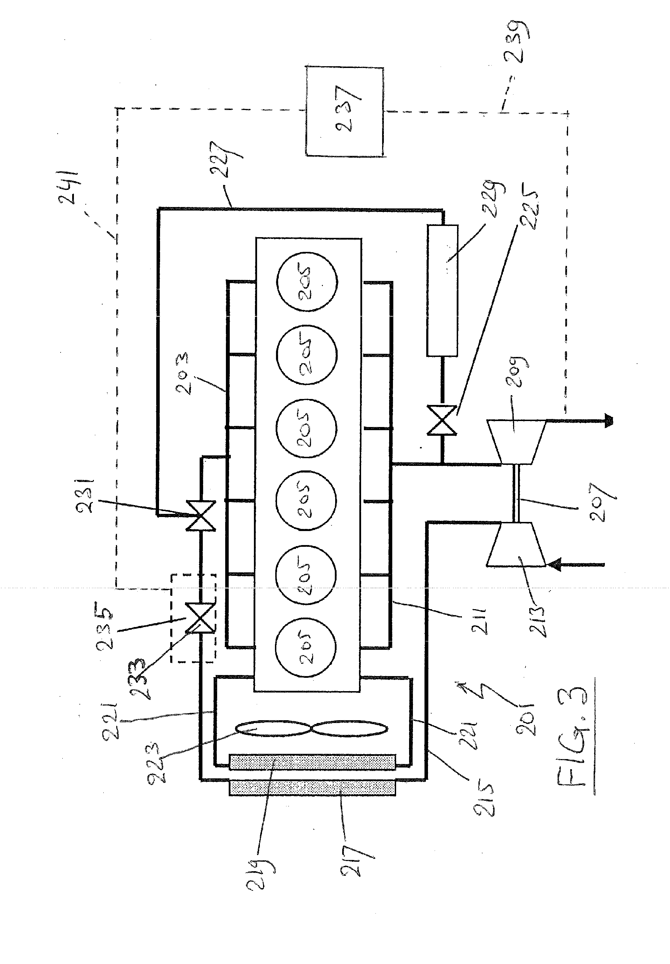

In Figure 3, a further embodiment of the invention is implemented on a Diesel-type internal combustion engine 201. Reference numerals used in Figure 3 are again a full '200", respectively a full "100", higher than those used in Figure 1, respectively Figure 2, to designate similar elements. The engine 201 receives combustion air from an inlet manifold 201 in to its individual cylinder 205. Each individual cylinder 205 is periodically in fluid communication with the inlet manifold 203 to receive combustion air and is also periodically in communication with an exhaust manifold 211 to expel combustion gasses. The described periodic fluid communications are controlled in a conventional way by mechanically operated and timed poppet valves. Such mechanical valve systems are well known and do not require a detailed description here. The exhaust manifold is in continuous fluid communication with the turbine section 209 of a turbo charger 207 which powers a compressor section 213. The compressor 213 supplies ambient air to supply pipe 215 that feeds combustion air past an intercooler 217 and towards the inlet manifold 203.

In the embodiment of Figure 3 the supply of combustion air to the manifold 203 can be interrupted by an intermittently operable airflow control valve 233. In other respects the embodiment of Figure 3 has a comparable system of exhaust gas recirculation, including an EGR valve for diverting a fraction of the exhaust gas through recirculation duct 227, via an EGR venturi 231.

The EGR venturi 231 is shown downstream of the airflow control valve 233, but may optionally also be in an upstream position with respect to the airflow control valve 233. Cooling of the engine and the intercooler 217 is again similar to the other embodiments by means of a fan 223 and water cooler 219 connected to the water circulation of the engine cooling system, using fluid connections 221.

In this third implementation of the invention as shown in Figure 3, the combustion airflow control 235 only includes one single airflow control valve 233. Using a quickly operable valve such as electromagnetically opened and pneumatically or high pressure electro-hydraulically operated valves, it has become an option to use a common auxiliary valve, rather than an individual one for each cylinder. While clearly such a single common valve 233 must be of advanced specification to cope with the increased frequency of operation, it would also greatly benefit simplification by being less demanding on engine modification. As with the previous embodiments the combustion airflow control 235 is operated by the control unit 237 in response to the exhaust gas temperature communicated to the control unit 237 through communication line 239. The control unit 237, optionally in conjunction with the airflow control 235, operates the airflow control valve 233 in accordance with the timing of the inlet valve, of the individual cylinders 205. In the shown example of a 6-cylinder engine the common control valve 233 would preferably have an operating frequency six times as fast as the individual auxiliary valve 133 of the embodiment of Figure 2.

Conceivably the operating frequency of a common flow control valve 233 could be less, but then some throttle losses may be experienced, but still less than what would be experienced by a non-intermittently operated conventional throttle valve.

Clearly the technical feasibility of the option according to the embodiment schematically illustrated in Figure 3, depends on the volumes allowed between the airflow control valve 233 and the individual cylinders or combustion chambers 205. A Miller-like inlet cycle timing may only be achieved when these volumes are designed as small as possible. Nonetheless there would still be the effect of a reduced operating frequency.

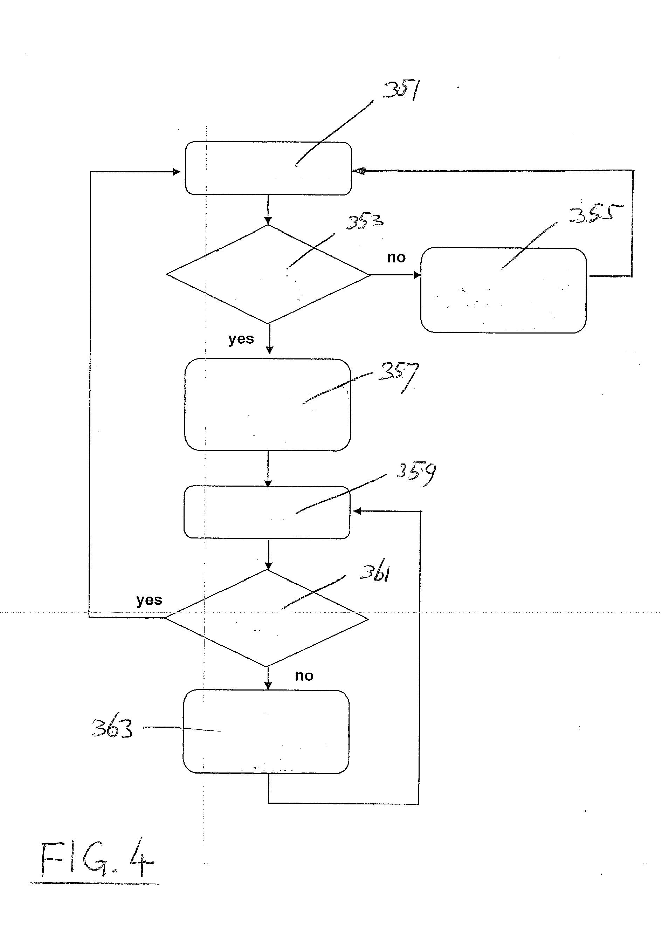

Figure 4 now illustrates the logic steps that control operation of the control units 37, 137, 237. In a first step 351 the temperature directly upstream of an exhaust gas after-treatment unit is sensed. In a second step 353 the control unit determines whether the sensed temperature reaches a predefined minimum level. When the sensed temperature is found not to be below the predefined level the control unit 37, 137, 237 proceeds to step 355 and allows normal operation of the engine by disabling the airflow control 35, 135, 235. With the airflow control disabled the variable valve timing of the embodiment of Figure 1 is allowed to be controlled by parameters other than the exhaust gas temperature. Disabling of the airflow control 135 of the embodiment of Figure 2 means that the individual auxiliary valves 133 are kept fully open for the entire engine cycle. In the embodiment of Figure 3, it is the common auxiliary airflow valve 233 that is kept fully open during running of the engine.

Coming from step 351, it could also be determined by step 353 that the temperature of the exhaust gas is too low for a proper operation of the after-treatment system. In that case the control unit 37, 137, 237 proceeds to step 357 which either advances valve closing of the variable valve system 35 (Figure 1) or reduces combustion airflow by closing the electromagnetically operated valves 133 (Figure 2) or 233 (Figure 3) prior to the normal dosing of the engines' inlet valves. Having continued towards step 357, the control unit 37, 137, 237 further senses the EGR flow and in step 361 checks this to be still in accordance with the specification for reducing NO_{X}. If this is the case the system reverts to step 351. Should operation of the combustion airflow control have adversely affected the EGR flow then step 361 proceeds to step 362 for adjusting the EGR flow to be commensurate with the predefined standards of NO_{X} reduction. The EGR flow can be adjusted by controlling the EGR valve 25, 125, 225 or alternatively, also by changing the variable geometry of the turbine 9, 109, 209 when a VTG-type turbo charger is used. Step 362 then returns to step 359 as often as necessary for step 361 to return to step 351.

While in the above examples the system is described in combination with an EGR system, the system may also be employed without any exhaust gas recirculation. Without an EGR system the invention may even be used to greater benefit. In that case the management system of Figure 4 may use an adapted arrangement.

Accordingly in the above a system for thermal management of an exhaust after-treatment device, by controlling exhaust gas temperature of an internal combustion engine having a combustion cycle frequency and being provided with such an exhaust gas after-treatment device is disclosed. The described system thus includes a combustion airflow control valve adapted for positioning upstream of an air inlet of a combustion chamber. The system according to the examples explained further includes a control unit for controlling the airflow controlling valve and an exhaust gas temperature sensor adapted for positioning upstream of, and adjacent to, the exhaust gas after-treatment device. In use the temperature sensor communicates with the control unit and the control unit communicates with the airflow control valve. The system as disclosed in particular has its airflow control valve adapted to be operated at a frequency commensurate with the combustion cycle frequency. Further a prime mover has been disclosed that includes an internal combustion engine provided with an exhaust gas after-treatment device and the system for controlling the exhaust gas temperature.

It should further be noticed that in the exhaust tracts currently offered by original equipment manufacturers the DPF mostly is upstream of the SCR, often in combination with a diesel oxidation catalyst (DOC). In such systems the DPF and DOC will benefit most from an increase of the exhaustgas temperature. This will possibly be favourable to obtaining passive regeneration of the DPF, as described above. While in certain applications it may be preferred to have the SCR upstream of the DPF, it is also conceivable that in future systems one after-treatment component combines the functions of the SCR and DPF, whereby both functions may equally benefit from the temperature increase.

It is thus believed that the operation and construction of the present invention will be apparent from the foregoing description. The invention is not limited to any embodiment herein described and, within the purview of the skilled person; modifications are possible which should be considered within the scope of the appended claims. Equally all kinematic inversions are considered inherently disclosed and to be within the scope of the present invention. In the claims, any reference signs shall not be construed as limiting the claim. The term 'comprising' when used in this description or the appended claims should not be construed in an exclusive or exhaustive sense but rather in an inclusive sense. Thus the expression 'comprising' as used herein does not exclude the presence of other elements or steps in addition to those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Features which are not specifically or explicitly described or claimed may be additionally included in the structure according to the present invention without deviating from its scope.

## Claims

1. System for controlling exhaust gas temperature of an internal combustion engine having a combustion cycle frequency and being provided with an exhaust gas after-treatment device, the system including:
a combustion airflow control valve adapted for positioning upstream of an air inlet of a combustion chamber;
a control unit for controlling the airflow controlling valve; and
an exhaust gas temperature sensor adapted for positioning upstream of, and adjacent to, the exhaust gas after-treatment device;
wherein in use the temperature sensor communicates with the control unit and the control unit communicates with the airflow control valve, **characterised in that** the airflow control valve is adapted to be operated at a frequency commensurate with the combustion cycle frequency.

2. System according to claim 1, wherein the combustion airflow control valve is an auxiliary valve that is adapted to be positioned upstream of an engine's periodically opening and closing combustion chamber entrance.

3. System according to claim 2, wherein the auxiliary valve is one of a plurality of such valves, each adapted to be associated directly with a relevant one of an equal plurality of combustion chamber entrances and to be independently operated in accordance with the combustion cycle of the relevant combustion chamber.

4. System according to claim 1, wherein the combustion airflow control valve is associated with the engine's variable timing valve actuation system.

5. System according to one of claims 1 to 4, wherein the control unit is adapted in use to determine whether a temperature sensed by the exhaust gas temperature sensor exceeds a predefined value.

6. System according to claim 5, wherein the control unit is further adapted in use to one of:
(i) advancing closure of the flow control valve, if it is part of an engine's variable timing valve actuation system; and
(ii) closing the control valve in advance of closure of an engine's periodically opening and closing combustion chamber entrance, if it is an auxiliary valve, to thereby reduce combustion air mass admitted into the engine's combustion chamber.

7. System according to claim 5 or 6, wherein the control unit is further adapted in use to be combined with exhaust gas recirculation and to determine whether a recirculation flow of exhaust gas achieves a predetermined level of NOₓ reduction and including means responsive to such determination to adjust the recirculation flow, when found necessary, sufficiently to restore the predetermined level.

8. Prime mover including an internal combustion engine having a combustion cycle frequency and being provided with an exhaust gas after-treatment device and the system of one of the preceding claims.

9. Prime mover according to claim 8, wherein the prime mover is a vehicle engine.

10. Prime mover according to claim 8 or 9, wherein the engine is a Diesel-cycle engine.

11. Prime mover according to one of claims 8, 9 or 10, wherein the engine is provided with a supercharger.

12. Prime mover according to claim 11, wherein the supercharger is a turbocharger.

13. Prime mover according to claim 12, wherein the turbo charger has a variable turbine geometry.

14. Prime mover according to one of claims 8 to 13, wherein the engine has periodically operated poppet valves for controlling the inlet of its combustion chamber.

15. System according to claim 1, wherein the airflow control valve is able to operate within an inlet valve stroke of an internal combustion engine.
